# EUROPÄISCHE PATENTANMELDUNG

(11) **EP 3 763 469 A1**
(43) Veröffentlichungstag der Anmeldung: **13.01.2021**
(21) Anmeldenummer: 19020417.2
(22) Anmeldetag: 08.07.2019
(51) Int. Cl.: B23K 9/04, B23K 9/16, B23K 9/173, B23K 9/32, B23K 26/03, B23K 26/14

(54) **DYNAMISCHE MISCHUNG VON SCHUTZGASEN**

(71) Anmelder: Linde GmbH, 82049 Pullach (DE)
(72) Erfinder: Ammann, Thomas, 80939 München (DE)
(74) Vertreter: Lu, Jing

(57) **Zusammenfassung**

Die Erfindung betrifft ein Verfahren zur dynamischen Zuführung von Schutzgas, umfassend Zuführen eines Schutzgases (30, 32) an ein Bauteil (18) in einem Schweißvorgang, Erfassen (110) der Temperatur eines Bereichs des Bauteils; und Festlegen (120) einer Zusammensetzung des Schutzgases (30) in Abhängigkeit von der erfassten Temperatur.

## Beschreibung

Die Erfindung betrifft ein Verfahren zur Zuführung von Schutzgasen in einem Schweißvorgang, insbesondere zur dynamischen Mischung von Schutzgasen beim Lichtbogenschweißen.

Die Zusammensetzung des verwendeten Schweißschutzgases ist abhängig von den genutzten Werkstoffen und Prozessen. Es kann sich beispielsweise beim Metall-Inertgasschweißen (MIG) um Inertgase wie Argon oder um ein argonbasiertes Gasgemisch handeln. Außerdem können dem Schutzgas weitere Bestandteile zugesetzt sein, die Einfluss auf den Prozess haben; beispielsweise werden beim Metall-Aktivgasschweißen (MAG) gezielt reaktionsfreudige Gase zugesetzt, die mit der Schmelze entsprechende Reaktionen eingehen.

Je nach genutztem Werkstoff wird ein solches Verfahren in einer abgeschlossenen Schutzgasatmosphäre oder an Luft ausgeführt. Reaktive Werkstoffe wie etwa Titanlegierungen müssen nach dem unmittelbaren Schweißvorgang noch so lange in einer inerten Atmosphäre verbleiben, bis sie unter eine Schwellentemperatur abgekühlt sind, unterhalb derer eine Oxidation nicht mehr stattfindet. Bei anderen Werkstoffen wiederum, wie etwa Stählen, ist eine nachträgliche Schutzgaszufuhr nach dem Schweißvorgang nicht notwendig.

Zunehmend wichtig werden Schweißverfahren nicht nur als Fügeverfahren zum Verbinden von Bauteilen, sondern auch als additive Fertigungsprozesse, wie etwa das sogenannte Lichtbogendraht-Auftragsschweißen oder Wire Arc Additive Manufacturing (WAAM). Bei diesem Fertigungsverfahren wird durch einen Lichtbogenschweißprozess ein dreidimensionales Bauteil durch wiederholtes Auftragen von Schweißraupen additiv gefertigt. So erhält man einen endkonturennahen Bauteilrohling, der anschließend noch spanend oder auf andere beliebige Weise weiter bearbeitet werden kann. Bei diesem Auftragsschweißen kann jedoch der Wärmehaushalt im Bauteil Probleme bereiten, da durch den Lichtbogen nicht nur das Material auf- und abgeschmolzen wird, sondern auch große Wärmemengen in das bereits gefertigte Bauteil eingebracht werden. Je nach Wärmeleitfähigkeit des verwendeten Materials wird diese Wärme mehr oder weniger schnell in die Grundplatte abgeleitet. Bei schlecht wärmeleitfähigen Werkstoffen kann sich die Wärme im Bauteil mit zunehmendem Baufortschritt aufstauen und zu übermäßiger Weichheit, unerwünschten Gefügeveränderungen oder frühzeitigem Schmelzen führen. Dies erfordert dann eine zusätzliche externe Kühlung und/oder längere Wartezeiten vor der nächsten Schweißlage.

Der Erfindung liegt daher die Aufgabe zugrunde, die Wärme im Bauteil während eines Schweißvorgangs besser kontrollieren zu können, um Verzögerungen, zusätzliche Eingriffe in das Verfahren oder gar Fertigungsfehler zu vermeiden.

Diese Aufgabe wird dadurch gelöst, dass ein Verfahren zur dynamischen Zuführung von Schutzgas vorgeschlagen wird, welches mindestens die folgenden Schritte umfasst: das Zuführen eines Schutzgases an ein Bauteil in einem Schweißvorgang, das Erfassen der Temperatur eines Bereichs des Bauteils sowie das Festlegen einer Zusammensetzung des Schutzgases in Abhängigkeit von der erfassten Temperatur. Auf diese Weise kann durch temperaturabhängige Veränderung der Zusammensetzung des verwendeten Schutzgases Einfluss auf die Prozessparameter des Schweißvorgangs genommen werden.

Bevorzugt umfasst das Festlegen der Zusammensetzung des Schutzgases eine Änderung der Zusammensetzung so, dass sich die Wärmeleitfähigkeit und/oder die lonisationsenergie des Schutzgases ändert. Auf diese Weise kann der Wärmeeintrag ins Bauteil gesteuert oder zumindest beeinflusst werden, so dass verschiedene Vorteile erreicht werden. Insbesondere kann so bei einem additiven Prozess ein zuverlässiger Prozessstart und ein gutes Schmelzverhalten auch bei geringem Baufortschritt erreicht werden, während in späteren Baustadien ein zu hoher Wärmeeintrag in das Bauteil verhindert wird. Damit sind auch verringerte Kühlzeiten und somit insgesamt kürzere Fertigungszeiten möglich.

In beispielhaften Ausführungsformen kann das Verfahren weiter das Ausgeben eines Steuersignals gemäß der festgelegten Zusammensetzung an eine Gasmischeinheit umfassen, welche zum Mischen von mindestens zwei Gaskomponenten gemäß der Zusammensetzung eingerichtet ist. Damit kann die Zusammensetzung des Schutzgases mindestens diese beiden Komponenten, optional aber auch mehr Komponenten umfassen. Durch die Ansteuerung kann jederzeit die Zusammensetzung entsprechend angepasst werden. Beispielsweise kann eine erste Komponente der Zusammensetzung Argon oder ein argonbasiertes Gasgemisch sein, und eine zweite Komponente kann Helium sein. Der Heliumanteil könnte dann beispielsweise im Verlauf des Schweißprozesses bei bis zu 100%, und/oder zunächst bei 70%, zwischendurch bei 50% und zum Ende der Fertigungsdauer hin bei 30% liegen. Ein hoher Heliumanteil kann durch die erhöhte Wärmeleitfähigkeit des resultierenden Schutzgases den Wärmeeintrag ins Bauteil erhöhen, während in späteren Verfahrensschritten, in denen ein hoher Wärmeeintrag nicht mehr gewünscht oder notwendig ist, nur die erste Komponente oder nur ein geringerer Heliumanteil genutzt werden kann.

Speziell im Beispiel eines Draht-Auftragsschweißvorganges könnte zu Beginn des Auftragsschweißvorgangs ein Anteil von 30-60% Helium in der Zusammensetzung des Schutzgases verwendet werden. Später im Aufbau des Bauteils kann dieser Anteil zunehmend verringert werden. Die verbesserte Kontrolle über den Auftrag und die Materialanbindung ermöglicht eine bessere Endkonturennähe eines additiv gefertigten Bauteils, was wieder spätere Fertigungsschritte abkürzt und insgesamt zu niedrigeren Kosten führt.

Das Festlegen der Zusammensetzung des Schutzgases kann zum Beispiel einen Vergleich der erfassten Temperatur mit mindestens einem vorbestimmten Temperaturwert umfassen, und bei Über- oder Unterschreiten des vorbestimmten Temperaturwerts das Ändern der Zusammensetzung des Schutzgases gemäß vorbestimmter Vorgaben. Ebenso kann das Festlegen der Zusammensetzung des Schutzgases ein Berechnen der Zusammensetzung des Schutzgases mittels einer vorgegebenen Zuordnung oder Funktion umfassen, wobei die erfasste Temperatur eine Variable der Zuordnung oder Funktion ist.

Insbesondere können die Verfahrensschritte von einem Prozessor, Controller oder Computer ausgeführt werden, wobei die Anweisungen zur Durchführung der Verfahrensschritte in Form eines Computerprogramms gespeichert sein können. Ein solches Programm kann auch auf einer bereits vorhandenen Steuereinheit für einen Schweißprozess einfach implementiert werden.

Daneben wird auch eine Vorrichtung zur dynamischen Zuführung von Schutzgas vorgeschlagen, die zumindest eine Steuereinheit umfasst, welche zum Ausführen der vorstehend beschriebenen Verfahrensschritte eingerichtet ist, sowie eine Gasmischeinheit, die eingerichtet ist, mindestens eine erste und eine zweite Komponente eines Schutzgases auf Grundlage eines Steuersignals abzugeben, wobei das Steuersignal von der Steuereinheit an die Gasmischeinheit übertragen wird; und eine Temperaturmesseinrichtung, die eingerichtet ist zum Erfassen der Temperatur eines Bauteils und zum Weiterleiten der Temperatur an die Steuereinheit.

### Figuren

Die Erfindung wird nachfolgend unter Bezug auf die Zeichnung näher beschrieben, wobei
Fig. 1 ein System für das Schutzgasschweißen gemäß einer beispielhaften Ausführungsform schematisch zeigt; und
Fig. 2 ein Ablaufdiagramm eines beispielhaften Verfahrens gemäß der Erfindung darstellt.

### Beschreibung beispielhafter Ausführungsformen

Die Erfindung ist grundsätzlich auf jedes Verfahren anwendbar, das unter Zufuhr von Schutzgasen abläuft und bei dem der Wärmeeintrag im Bauteil kontrolliert werden soll. Insbesondere eignet sich ein erfindungsgemäßes Verfahren für jedes gasgeschützte Lichtbogen-Schweißverfahren, also sowohl jedes konventionelle Verbindungsschweißen unter Schutzgas (Metallschutzgasschweissen, MSG) als auch additive Fertigungsverfahren wie WAAM.

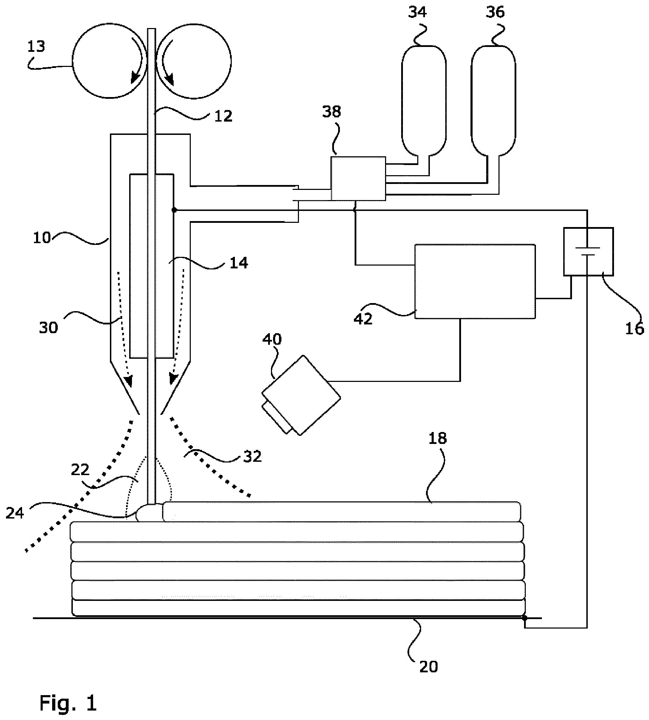

Am Beispiel eines additiven Schweißauftragsverfahrens wie dem bereits genannten WAAM-Verfahren wird nun die Erfindung genauer beschrieben. In Figur 1 ist ein beispielhaftes System zum Lichtbogen-Auftragsschweißen gemäß der Erfindung schematisch gezeigt. Dabei wird in einem Schweißbrenner 10 ein Schweißdraht 12 geführt, der als abschmelzende Elektrode wirkt. Der Schweißdraht 12 verläuft in einer Kontakthülse oder Stromhülse 14, die in Verbindung mit einer Stromquelle 16 steht. Dadurch wird zwischen dem Schweißdraht 12 und dem elektrisch leitenden Bauteil 18, das auf einer Grundplatte 20 aufgebaut wird, ein elektrischer Lichtbogen 22 gezündet, der zum Abschmelzen des Schweißdrahts 12 führt. Über motorisierte Führungen, z.B. Drahtvorschubrollen 13, auf denen der Schweißdraht läuft, wird der Draht 12 kontinuierlich nachgeführt. Das abgeschmolzene Material 24 lagert sich in Form von Schweißraupen ab, die beim WAAM-Verfahren durch Bewegung des Brenners oder des Bauteils unter dem Brenner auf geeignete Weise das Bauteil bilden.

Um den Draht 12 herum wird im Brenner 10 ein Schutzgas 30 zugeführt, z.B. ein inertes Gas, um die Schmelze 24 vor Oxidation zu schützen. Das aus geeigneten Düsen ausströmende Schutzgas 30 bildet im Bereich der Schmelze 24 oder an sonstigen gewünschten Bereichen des Bauteils 18 eine Schicht bzw. Schutzgasglocke 32. Das Schutzgas 30 wird in der vorliegenden Ausführungsform zumindest zeitweise als Kombination aus mehreren Komponenten 34, 36 zugeführt, die von einer ansteuerbaren Gasmischeinheit 38 gemischt oder in ihrer Menge angepasst werden. Außerdem ist eine Einrichtung zur Temperaturmessung 40 vorgesehen, welche die Temperatur des Bauteils 18 in einem gewünschten Bereich erfassen kann, z.B. im Bereich der Schmelze 24 oder auch in einem beliebigen vorgegebenen Abstand zur Schmelze, z.B. im Bereich der jeweils abkühlenden Schweißraupen. Bevorzugt sind die Temperaturmesseinrichtung 40, die Gasmischeinheit 38 und die Stromquelle mit einer Steuereinheit 42 verbunden, welche diese Elemente ansteuert.

Je nach Verfahren kann anstelle der gezeigten abschmelzenden Elektrode 12, die im Brenner geführt wird, auch z.B. eine nicht abschmelzende Elektrode wie beim Wolfram-Inertgas-Schweißen verwendet werden, so dass der Draht außerhalb des Brenners entsprechend kontinuierlich im Bereich des Lichtbogens 22 zugeführt wird. Als Materialien zum Aufschmelzen und/oder als Grundplatte für ein Füge- oder Aufbauverfahren können alle im Fach üblichen Materialien verwendet werden, also beispielsweise verschiedene Stähle, Aluminium, Titan- und Nickellegierungen, Kobalt-Chrom-Legierungen, Edelmetalllegierungen und viele weitere.

Durch gezielte Kombination von Bestandteilen des verwendeten Schutzgases kann nun Einfluss auf die Wärmeverhältnisse genommen werden. Der Zusatz von Helium zu einem argonbasierten Schutzgas bewirkt beispielsweise, dass durch die hohe Wärmeleitfähigkeit von Helium mehr Wärme durch den Lichtbogen in das Bauteil eingebracht wird. Dadurch kann auch die Lichtbogenleistung entsprechend reduziert werden und/oder schneller geschweißt werden, so dass die Effizienz des Vorgangs erhöht wird. Ebenso kann der zusätzliche Wärmeeintrag genutzt werden, um die Anbindung zu erleichtern, was insbesondere bei hochwärmeleitfähigen Werkstoffen wie Aluminium oder sehr zähflüssigen Werkstoffen wie etwa hochlegierten nichtrostenden Stählen von Vorteil ist.

Dies kann ausgenutzt werden, um im Verlauf eines Schweißvorgangs bzw. eines additiven Fertigungsvorgangs das Wärmeverhalten im Bauteil zu optimieren. Besonders am Anfang eines Auftragsprozesses, bei dem das Grundbauteil (z.B. eine Grundplatte 20) noch kühl ist, ist ein höherer Wärmeeintrag ins Bauteil vorteilhaft, um eine bessere Anbindung der Materialien zu erreichen. Wenn jedoch nach mehreren Schweißlagen der Aufbau des Bauteils bereits weiter fortgeschritten ist, kann ein erhöhter Wärmeeintrag nachteilig sein, da die bereits vorhandene Bauteilwärme das Anschmelzen bereits ausreichend unterstützt. Um dies zu erreichen, kann die Zusammensetzung des Schutzgases im Verlauf des Schweißvorgangs dynamisch abhängig von der Temperatur des Bauteils (oder bestimmter Bauteilbereiche) angepasst werden.

Zur Temperaturmessung kann jede geeignete Vorrichtung 40 verwendet werden. Gemäß einer bevorzugten Ausführungsform wird die Temperatur des Bauteils über eine berührungslose Temperaturmesseinrichtung erfasst. Auf diese Weise kann möglichst exakt und ohne Störung des Schweißvorgangs die Bauteiltemperatur festgestellt werden, wobei die Messung kontinuierlich oder in bestimmten Zeitabständen erfolgen kann. Mögliche Messverfahren für eine solche Messung umfassen beispielsweise eine Messung auf Grundlage einer Infrarot-Temperaturmessung mittels eines Pyrometers, bei dem aus der vom Bauteil abgegebenen Infrarotstrahlung auf die Temperatur geschlossen wird, oder andere geeignete Verfahren. Grundsätzlich sind aber auch lokale Messverfahren wie Temperaturfühler oder andere denkbar. Je nach Ausführung der Steuerung kann eine absolute Temperatur gemessen werden oder nur eine relative Änderung der Temperatur.

Die Temperaturmesseinrichtung 40 kann in einem Bereich des Fertigungssystems fest angebracht sein oder auch mit dem Schweißbrenner 10 verbunden sein, z.B. in Form eines am Brenner angebrachten Zusatzmoduls. Die gemessenen Temperaturen können direkt über entsprechende Verbindungen bzw. Kabel an eine Steuereinheit 42 übertragen werden. Alternativ kann auch die Temperaturmesseinrichtung 40 über drahtlose oder drahtgebundene Schnittstellen mit einer Steuereinheit verbunden sein.

Die Steuerung, die die Anpassung der Gaszusammensetzung vornimmt und die entsprechenden Elemente (wie z.B. Ventile) in einer Gasmischeinheit 38 ansteuert, kann eine eigene Schutzgassteuerung sein. Bevorzugt wird die Steuerung aber mit der Steuereinheit 42 kombiniert, die auch den Schweißprozess steuert, also z.B. den Elektrodenstrom, die Bewegungsgeschwindigkeit und/oder Bewegungsrichtung von Brenner 10 und/oder Bauteil 18 bei einer zumindest teilweise automatischen Fertigung, die Geschwindigkeit der Drahtzuführung 13 und weitere Prozessparameter. Insbesondere kann es sich auch um eine zentrale Steuereinheit handeln, die den gesamten Fertigungsprozess steuert, z.B. den automatischen Bauteilaufbau durch einen additiven Prozess, ähnlich wie in einem 3D-Drucker. Dabei kann die Steuerung beispielsweise auf Grundlage eines Mikroprozessors oder FPGAs (field programmable gate array) erfolgen oder in einer einfachen analogen Steuereinheit implementiert sein. Ebenso kann die gesamte Steuerung auf Softwarebasis in einem geeigneten Prozessor erfolgen. Dabei können in jeder Ausführungsform geeignete Verbindungen und Schnittstellen vorgesehen sein, um z.B. Temperatursensoren, Brenner oder Gasmischer auf einfache Weise an die Steuerung anbinden zu können. Ebenso können Anzeigeelemente und Eingabevorrichtungen vorhanden sein, um z.B. manuell in die Steuerung eingreifen zu können oder um Prozessparameter von einem Nutzer abfragen und eingeben zu können, die für die Steuerung verwendet werden.

Verschiedene Schutzgase und Gasmischungen sind an sich im Fach bekannt und können in Verbindung mit der vorliegenden Erfindung beliebig verwendet werden. Als Gasmischung wird dabei eine Mischung aus zwei oder mehr Elementen oder Verbindungen bezeichnet. Bevorzugt werden dabei Gase oder Gasmischungen verwendet, die unterschiedliche Wärmeleitfähigkeiten aufweisen, so dass bei Veränderung der jeweiligen Anteile von Gaskomponenten in der Gesamtzusammensetzung des Schutzgases auch die Wärmeleitfähigkeit entsprechend verändert wird. Wenn die Wärmeleitfähigkeiten der Komponenten sich stark unterscheiden, kann schon eine kleine Veränderung in der Zusammensetzung zu einer deutlichen Veränderung der Wärmeleitfähigkeit des resultierenden Gemischs führen, so dass eine entsprechende Anpassung der verwendeten Schutzgasmischung einen ausreichenden Effekt für die Wärmeverteilung im Bauteil ergibt.

Es ist auch möglich, dass eine Steuereinheit auf Grundlage gespeicherter Vorgaben die erwartete Wärmeleitfähigkeit eines Gasgemischs berechnet und auf dieser Grundlage optional zusätzlich die erwartete Temperaturänderung im Bauteil bei einer Änderung der Schutzgaszusammensetzung berechnet, so dass die Regelung dann mit diesen Ergebnissen die Gaszusammensetzung festlegen kann, z.B. auf Grundlage eines Sollwerts für die Bauteiltemperatur. Anstelle oder zusätzlich zu der Wärmeleitfähigkeit können auch andere Änderungen der Schutzgaswirkung in die Festlegung der Gaszusammensetzung einbezogen werden, z.B. die Reaktionsfähigkeit des Schutzgases beim Aktivgasschweißen.

In einer beispielhaften Ausführungsform kann etwa ein argonbasiertes Schweißschutzgas verwendet werden, also ein Gas mit dem Hauptbestandteil Argon, wobei optional weitere Bestandteile wie etwa CO2, O2, N2 oder H2 ebenfalls dem Schutzgas zugemischt sein können, bevorzugt in kleinen Mengen. Dieses argonbasierte Schweißschutzgas kann als erste Grundkomponente des Schutzgases verwendet werden. Als eine zweite Komponente des Schutzgases kann dann z.B. Helium verwendet werden, dessen hohe Wärmeleitfähigkeit die genannten Effekte wie höheren Wärmeeintrag ins Bauteil verbessern kann. Generell kann jede Gaskomponente auch selbst eine Mischung aus mehreren Gasen umfassen. Dabei kann im Verlauf des Prozesses der Heliumanteil im gesamten Schutzgas beispielsweise zwischen 0 und 60 Vol-% Helium liegen, bevorzugt zwischen 0 und 50 Vol-% oder auch zwischen 0 und 25 Vol-%, während der Rest Argon oder ein argonbasiertes Gasgemisch sein kann. Ebenso sind aber angepasst an die Prozessbedingungen auch andere Gaskomponenten oder Anteile möglich. So könnte der Heliumanteil in bestimmten Phasen des Verfahrens, beispielsweise zu Beginn, auf bis zu 100% gesteigert werden, und dann der Gehalt von Argon oder anderen Grundgasen erhöht werden bzw. der Heliumgehalt gesenkt werden.

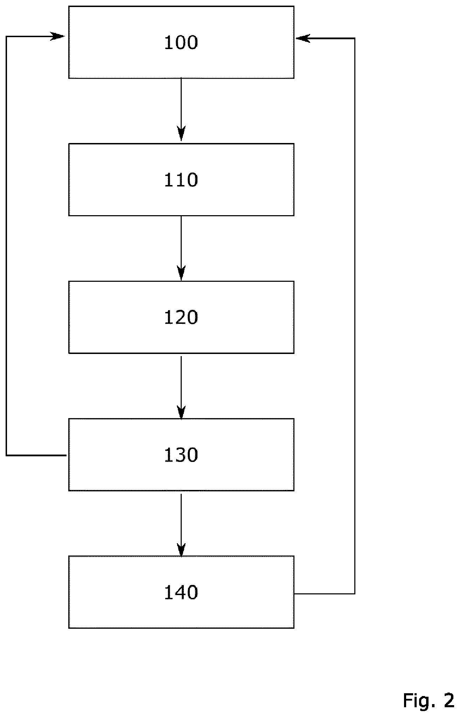

In Figur 2 sind beispielhafte Verfahrensschritte eines erfindungsgemäßen Verfahrens in einem Ablaufdiagramm gezeigt. Zu Beginn eines Schweißprozesses wie etwa einem WAAM-Bauprozess kann dann als Schutzgas eine voreingestellte Mischung mit einem hohen Heliumanteil verwendet werden, beispielsweise mit 50 Vol-% Helium und 50% Argon. Auch die sonstigen Parameter des Schweißprozesses können vorgegeben sein und mit diesen Parametern und der voreingestellten Schutzgaszusammensetzung der Schweißprozess in Schritt 100 gestartet werden. Nun wird kontinuierlich oder in Abständen die Temperatur eines Bauteilbereichs in Schritt 110 gemessen. Der gemessene Temperaturwert wird an eine Steuereinheit weitergegeben und dort in Schritt 120 verarbeitet, beispielsweise durch Vergleich mit einem Schwellwert, oder durch einsetzen in eine Funktion, welche eine resultierende Schutzgaszusammensetzung ausgibt. Die so gewonnene Festlegung der Gaszusammensetzung wird in Form eines Steuersignals an die Gasmischeinheit 38 in Schritt 130 weitergegeben. Mit der so angesteuerten Schutzgaszusammensetzung wird das Schweißverfahren 100 fortgesetzt. Damit kann der Heliumanteil im Verlauf des Verfahrens kontinuierlich oder stufenartig in Abhängigkeit von der gemessenen Bauteiltemperatur abgesenkt werden; so könnten beispielsweise Schwelltemperaturen festgelegt sein, bei denen der Heliumanteil auf 30%, 20% und schließlich 0% oder nahe 0% (z.B. zwischen 0,5% und 3%) abgesenkt wird, oder der Heliumanteil kann als Funktion der gemessenen Temperatur stufenlos angepasst werden. Dabei kann es sich um einen linearen oder nicht-linearen Zusammenhang zwischen Temperatur und Gaszusammensetzung handeln. Anstelle einer Funktion kann auch eine Zuordnung von Temperatur- und Anteilswerten vorgegeben sein, z.B. in Form einer abgespeicherten Zuordnungstabelle. Bei einer kontinuierlichen Temperaturmessung kann entsprechend auch die Gaszusammensetzung kontinuierlich geändert werden, oder es können in vorgegebenen Zeitabständen Temperaturmessungen ausgewertet werden und in Folge die Gaszusammensetzung angepasst werden. Auch bei einer kontinuierlichen Temperaturmessung kann jedoch ebenso eine nur stufenweise Anpassung der Gaskomponenten gewählt werden. Die entsprechenden Vorgaben wie Schwellentemperaturen, Funktionen und optionale Parameter wie Zeitabstände für Temperaturmessung und Gasanpassung können in der Steuereinheit gespeichert werden, z.B. auch spezifisch für jeden Prozess, und bei Bedarf verändert oder aktualisiert werden. Alternativ können für beliebige Prozesse gleichartige Zusammensetzungen vorgegeben werden, die nur temperaturabhängig angepasst werden.

Anstelle einer Zumischung von Helium zu Argon oder argonbasierten Gasen könnten auch geeignete andere Gase gemischt werden. Insbesondere bei der Verwendung von Stahl als Werkstoff könnte beispielsweise ein argonbasiertes Gas als erste Gaskomponente genutzt werden und dann in geeigneter Menge Kohlendioxid, CO₂, dynamisch zugemischt werden. Wie im vorherigen Beispiel könnte dann zu Beginn eines Auftragsprozesses ein hoher CO₂-Anteil vorgesehen sein, der im Verlauf des Schweißauftrags stufenweise oder kontinuierlich abgesenkt wird. Auf diese Weise wird wieder anfangs ein guter Wärmeeintrag bzw. Einbrand erreicht und später ein übermäßiger Wärmeeintrag ins Bauteil verhindert. Der geeignete Gehalt von CO₂ kann werkstoffabhängig festgelegt werden, wobei z.B. bei nichtrostendem Stahl bevorzugt ein CO₂-Gehalt von 0 bis 4 % vorgesehen sein kann, während bei einem unlegierten Stahl höhere CO₂-Anteile von bis zu 25% vorteilhaft sein können. Auf ähnliche Weise kann also für jeden gewählten Werkstoff eine geeignete Kombination aus mehreren Gaskomponenten gewählt werden, deren Anteile sowohl im Verlauf als auch in Bezug auf ihre minimalen und maximalen Anteile am Gasgemisch variabel angepasst werden.

Es können auch für verschiedene Abschnitte eines Fertigungsverfahrens unterschiedliche Temperaturschwellen festgelegt werden, so dass die gleiche Bauteiltemperatur je nach Prozessabschnitt auch unterschiedliche Gaszusammensetzungen bedingen kann.

In einer Ausführungsform der Erfindung kann auch ein rückgekoppelter Regelkreis eingesetzt werden, der die Gaszusammensetzung abhängig von der Temperatur regelt, wobei der Anteil von einer oder mehreren Gaskomponenten als Stellgröße in der Regelung verwendet wird und eine zu haltende Solltemperatur (oder ein breiterer Temperaturbereich) des Bauteils als Zielwert vorgegeben wird.

In einer weiteren beispielhaften Ausführungsform kann die Zusammensetzung des Schutzgases auch drei oder mehr Komponenten umfassen, von denen alle oder nur manche in einer Gasmischeinheit 38 dynamisch angepasst werden. Beispielsweise können zwei Komponenten in festem Verhältnis verwendet werden, während der Anteil der dritten Komponente temperaturabhängig angepasst wird. Ebenso können zwei Komponenten angepasst werden, z.B. könnte auch eine Komponente mit steigender Temperatur kontinuierlich verringert werden, während eine weitere Komponente ab Überschreitung oder Unterschreitung einer bestimmten Schwellentemperatur zusätzlich mit festem oder variablem Anteil hinzugefügt wird. Alternativ könnte auch eine Komponente temperaturabhängig angepasst werden, während eine andere Komponente (z.B. Sauerstoff) zur Veränderung weiterer Prozessbedingungen auf Grundlage anderer Parameter dynamisch verändert wird, z.B. zur Erhöhung der Abschmelzgeschwindigkeit. Angelehnt an die oben genannten Beispiele kann beispielsweise ein Gasgemisch vorgesehen sein, bei dem Argon oder ein argonbasiertes Schweißschutzgas als erste Gaskomponente gewählt ist und als zwei weitere Komponenten Helium und CO₂ jeweils angepasst an die Temperatur und/oder den Prozessverlauf mit veränderlichem Anteil zugemischt werden, so dass ein Gasgemisch aus (mindestens) drei Komponenten vorliegt.

Auch bei Verwendung von nur zwei Gaskomponenten kann entweder eine Gaskomponente kontinuierlich in gleicher Menge zugeführt werden und die zweite Gaskomponente entsprechend gedrosselt oder erhöht werden, bis die gewünschte anteilmäßige Zusammensetzung im gemischten Gas aus beiden Komponenten erreicht ist, oder es können beide Gaskomponenten aktiv gedrosselt bzw. gesteuert werden, beispielsweise über elektromagnetisch oder pneumatisch betriebene Drosselventile. Ebenso können herkömmliche Gasmischstationen verwendet werden, soweit sie mit geeigneten Steuersignalen von der Steuereinheit elektronisch ansteuerbar sind. Als Steuersignal ist dabei jedes Signal zu verstehen, das in der Lage ist, eine entsprechende Steuerung der Gaskomponenten in einer Gasmischeinheit auszulösen, also etwa ein analoges Spannungssignal, das an ein elektromagnetisches Ventil oder eine Sperreinrichtung angelegt wird. Dabei können entsprechende steuerbare Ventile bzw. Absperrungen oder Regeleinrichtungen für die Gasmenge nur für eine oder für mehrere Gaskomponenten vorgesehen sein.

Es kann am Bauteil bevorzugt die fertig gemischte Schutzgasmischung zugeführt werden, oder in einer einfacheren Ausführungsform die jeweiligen Anteile der Gaskomponenten einzeln im Bereich des Brenners oder Bauteils zugeführt werden und die Mischung durch die Gasströmung erreicht werden.

Da die Wärmeverteilung im Bauteil insbesondere bei einer additiven Fertigung einen Einfluss auf die Stabilität, die aufgebauten Schichtgeometrien und die Oxidationsprozesse der erzeugten Schichten hat, können diese Effekte auch weiter ausgenutzt werden, indem gezielt für einen Prozessabschnitt eine bestimmte Temperatur angestrebt wird, optional auch nur vorübergehend. So könnte beispielsweise entweder automatisch gesteuert oder durch manuellen Eingriff die Gaszusammensetzung so geändert werden, dass die Bauteiltemperatur vorübergehend angehoben wird, und danach die Temperatursteuerung bzw. die dafür erforderliche Steuerung der Gaszusammensetzung wieder zurück auf den vorgegebenen Verlauf fällt, z.B. um ein anderes Schmelzverhalten des Drahts an einer bestimmten Stelle zu erreichen.

Während wie vorstehend beschrieben die Gaszusammensetzung des Schutzgases direkt abhängig von der Temperatur gemacht werden kann, ist es in einer komplexeren Ausführungsform auch möglich, die gemessene Temperatur zunächst weiter zu verarbeiten und dann auf dieser Grundlage die Gaszusammensetzung anzupassen. Beispielsweise könnte eine solche Ansteuerung aus der gemessenen Temperatur und vorgegebenen Parametern wie dem verwendeten Drahtmaterial, der Wand- und Schichtdicke der aufgebauten Materialien, der Geschwindigkeit der Materialablagerung bzw. der Drahtzuführung und weiteren Kennzahlen geeignete Parameter berechnen, die das Wärmeverhalten im Bauteil modellieren. Auf diese Weise könnte beispielsweise in einer Steuerung aus Temperaturmessungen das Wärmeleitverhalten der aufgebauten Schichten abgeschätzt werden und abhängig von der erwarteten Wärmeentwicklung die Gaszusammensetzung genauer angepasst werden. Dies ermöglicht eine optimierte Anpassung der verwendeten Schutzgase.

Ebenso wäre es möglich, die Bauteiltemperatur nicht direkt im Bereich der Schmelze zu messen, sondern einen Temperaturfühler oder eine andere Messvorrichtung z.B. am Rand des Bauteils anzuordnen und die Bauteiltemperatur im Bereich der Schmelze bzw. in anderen interessierenden Bereichen auf Basis vorgegebener Wärmeleitmodelle abzuschätzen, und dann auf dieser Grundlage die Gaszusammensetzung anzupassen.

Weiter könnte anstelle einer exakten Steuerung der Gaszusammensetzung durch aktive Mischung von mehreren Komponenten in einer einfacheren Ausführungsform auch die Gaszusammensetzung dadurch geändert werden, dass bei der Zuführung des Schutzgases zwischen zwei fest vorgegebenen Gasmischungen umgeschaltet wird. Als Auslösebedingung für das Umschalten kann beispielsweise wieder eine Temperaturschwelle verwendet werden. Dadurch können fertige Schutzgasmischungen auf einfache Weise verwendet werden und es muss nur eine ansteuerbare Schaltmöglichkeit vorhanden sein, die zwischen zwei (oder mehr) Gaszuleitungen umschalten kann. Beispielweise könnte ein erstes Gas auf Argonbasis ohne relevante Zusätze als Grundgas verwendet werden, während eine zweite Gasmischung mit Heliumanteil unter bestimmten Bedingungen etwa bei Prozessbeginn als Schutzgas verwendet wird und die Steuerung nur zwischen der Zufuhr dieser beiden Schutzgase bei Bedarf umschaltet.

In einer beispielhaften Ausführungsform ist auch denkbar, die Gaszusammensetzung im Wesentlichen auf Grundlage eines zeitlichen Ablaufs zu steuern. Dies bietet sich insbesondere an, wenn auch der Schweißprozess automatisch gesteuert abläuft, so dass vorab bekannt ist, in welchem Prozesszustand sich der Schweißprozess befindet. Auf diese Weise muss die aktuelle Temperatur nicht oder nicht ständig überwacht werden und fließt indirekt durch Kenntnis der Prozessbedingungen dennoch in die Steuerung mit ein.

Beispielsweise kann eine solche Steuerung auch auf Grundlage eines durchlaufenen Standardprozesses aufgenommen bzw. angepasst werden, bei dem Temperaturen und optional weitere Prozessparameter überwacht werden, um die Gaszusammensetzung optimal anzupassen. Die Temperaturmessung und Steuerung kann in diesem Fall wie in den vorstehenden Beispielen stattfinden. In späteren Durchläufen mit identischem oder gleichem Prozessablauf kann ein solches System dann automatisch ohne weitere Messungen die Zusammensetzung anpassen. Natürlich ist es ebenso möglich, anstelle einer reinen Zeitsteuerung eine Steuerung auf der Grundlage momentan ablaufender Verfahrensschritte in einem Schweißprozess anzuwenden, falls z.B. ein Brenner automatisch an bestimmte Orte am Werkstoff bewegt wird (bzw. umgekehrt ein Bauteil unter dem Brenner entlang bewegt wird).

Ebenso ist es aber möglich, eine solche grobe zeitliche oder von Verfahrensschritten abhängige Steuerung der Gaszusammensetzung durch Überwachung von Temperaturmessdaten weiter zu verfeinern bzw. anzupassen, also eine zeitliche und temperaturabhängige Steuerung miteinander zu kombinieren.

In weiteren beispielhaften Ausführungsformen können in Schritt 140 aus Figur 2 Parameter des Schweißbrenners 10 selbst angepasst werden, z.B. abhängig von den gemessenen Temperaturen und/oder abhängig von der Ansteuerung der Schutzgaszusammensetzung. Diese Parameter fließen wiederum an die jeweils angesteuerten Elemente, z.B. Stromquelle, Drahtzuführung oder andere, und das Verfahren wird mit diesen geänderten Parametern fortgesetzt. So können alle Prozessparameter ideal und auch kurzfristig aufeinander abgestimmt werden. Insbesondere können die Parameter des Brenners bzw. der Stromquelle 16 des Schweißgeräts abhängig von der angesteuerten Gaszusammensetzung eingestellt werden. Dazu können entsprechende Funktionen oder Zuordnungen auch für die Anteile der Gaskomponenten und den verwendeten Strom vorliegen und auf dieser Basis die Stromquelle 16 angesteuert werden.

In einem beispielhaften System können Vorgaben wie verwendete Werkstoffe abgespeichert und abrufbar sein, oder können auch in einem Nutzerdialog flexibel abgefragt bzw. eingegeben werden, so dass für jeden beliebigen Prozess die optimale Zusammensetzung genutzt wird. Beispielsweise ist es denkbar, für unterschiedliche Werkstoffe oder vorbestimmte konkrete Werkstücke verschiedene Temperaturschwellen oder verschiedene Funktionen für die dynamische Gaszusammensetzung abzuspeichern, die dann im Betrieb abgerufen werden können. Ebenso können Parameter auch abhängig von der an das System angeschlossenen Vorrichtung verändert werden, beispielsweise indem der Typ des Schweißgeräts bzw. Brenners vom Nutzer ausgewählt wird oder automatisch beim Anschluss erkannt wird.

Anstelle einer integrierten oder beigeordneten Schutzgasdüse am Brenner wie zuvor beschrieben können Ausführungsformen der Erfindung alternativ auch in einer Kammer oder einem anderweitig zumindest teilweise abgeschlossenen Bereich ausgeführt werden, in den Schutzgas eingeleitet wird, so dass im wesentlichen die gesamte Kammer mit Schutzgas gefüllt ist. Dabei kann entweder das komplette Bauteil oder zu bearbeitende Teiloberflächen in die Kammer eingebracht werden. Ebenso können mobile Abdeckelemente mit oder ohne integrierten Brenner auf ein Bauteil aufgesetzt werden, die das Schutzgas an Ort und Stelle halten, wobei eine oder mehrere Schutzgasdüsen entsprechend in das Abdeckelement integriert sein können. In allen Fällen können sämtliche Ausführungsformen der dynamischen Schutzgasmischung wie vorstehend beschrieben angewendet werden.

Ebenso ist es denkbar, an einem Bauteil und/oder einem Brenner mehrere Düsen anzuordnen, durch die dann gleiche oder unterschiedliche Schutzgasmischungen an das Bauteil herangeführt werden können. Auf diese Weise kann beispielsweise direkt an der Schmelze eine andere Schutzgasmischung zugeführt werden als an bereits abkühlenden Bauteilorten, die noch bis zur Abkühlung unter die Oxidationstemperatur mit Schutzgas beaufschlagt werden müssen. Auch hier kann die Steuerung entsprechend temperaturabhängig eine oder mehrere Schutzgasmischungen dynamisch ansteuern. Optional können dazu auch mehrere Temperaturmessvorrichtungen vorgesehen sein, wobei einmal die Temperatur im Bereich des Brenners und einmal die Temperatur in einem weiter entfernten Bereich zur Abkühlung gemessen wird und die Gaszusammensetzung entsprechend angepasst wird, oder nur für den Brennerbereich die Temperatur berücksichtigt wird. Auf diese Weise kann dafür gesorgt werden, dass z.B. das Schutzgas in der Nähe der Schmelze zeitweise mit zusätzlichen Gaskomponenten versehen wird, etwa Helium, während weiter entfernt ein preisgünstigeres Schutzgas ohne Heliumanteil für die Abkühlphase oder für die Ausfüllung der Kammer bzw. Abdeckhaube verwendet wird. Generell können notwendige Gasdüsen entweder separat vorgesehen, etwa zur Befestigung als Schleppdüse, oder direkt mit dem Brenner integriert ausgebildet sein.

Es versteht sich, dass alle vorstehend genannten Varianten und Optionen auch miteinander kombiniert oder auf andere Verfahren übertragen werden können. Beispielsweise können alle der verschiedenen Steuerprinzipien und Verfahrensschritte zur Festlegung der geeigneten Gaszusammensetzung auch kombiniert verwendet werden. Dabei können andere Gaskomponenten und Gasmischungen als beschrieben angewendet werden und die Beispiele zur temperaturabhängigen Veränderung der Zusammensetzung auf diese angewendet werden. Insbesondere wurden beispielsweise Draht-Auftragsschweißprozesse ausführlich beschrieben, jedoch eignet sich das erfindungsgemäße Verfahren zur dynamischen Gasmischung ebenso für andere bekannte Methoden, die den Einsatz von Schutzgasen und/oder Aktivgasen erforderlich machen, wie etwa Verbindungsschweißen, Pulver-Auftragsschweißprozesse mit verschiedenen Wärmequellen, Lasersintern mit Pulver- oder Drahtmaterial, allgemein Auftragsschweißen für Beschichtungsprozesse, verschiedene vollmechanische oder automatisierte Schweißverfahren wie MIG (Metall-Inertgas-Schweißen), MAG (Metall-Aktivgas-Schweißen), WIG (Wolfram-Inertgas-Schweißen) und Plasmaschweißen, Laserschweißen und Elektronenstrahlschweißen sowie weitere grundsätzlich bekannte Verfahren.

Ebenso sind neben den genannten Gasen und Gasmischungen auch andere Gase verwendbar, die die erforderlichen Eigenschaften haben. Der Aufbau eines Systems ist dabei abhängig von den verwendeten Materialien und Gasen, von den angewandten Füge- oder Auftragsmethoden und kann auf vielerlei Weise variiert werden.

### Bezugszeichen

- 10: Brenner
- 12: Drahtelektrode
- 13: Drahtzuführung
- 14: Stromhülse
- 16: Stromquelle
- 18: Bauteil
- 20: Grundplatte
- 22: Lichtbogen
- 24: Schmelze
- 30: Schutzgas
- 32: Schutzgasglocke
- 34: erste Gaskomponente
- 36: zweite Gaskomponente
- 38: Gasmischeinheit
- 40: Temperaturmesseinrichtung
- 42: Steuereinheit

## Patentansprüche

1. Verfahren zur dynamischen Zuführung von Schutzgas, umfassend
Zuführen eines Schutzgases (30, 32) an ein Bauteil (18) in einem Schweißvorgang, Erfassen (110) der Temperatur eines Bereichs des Bauteils; und
Festlegen (120) einer Zusammensetzung des Schutzgases (30) in Abhängigkeit von der erfassten Temperatur.

2. Verfahren nach Anspruch 1, wobei das Festlegen (120) der Zusammensetzung des Schutzgases (30) eine Änderung der Zusammensetzung so umfasst, dass sich die Wärmeleitfähigkeit und/oder die lonisationsfähigkeit des Schutzgases ändert.

3. Verfahren nach Anspruch 1 oder 2, weiter umfassend:
Ausgeben (130) eines Steuersignals gemäß der festgelegten Zusammensetzung an eine Gasmischeinheit (38), welche zum Mischen von mindestens zwei Gaskomponenten (34, 36) gemäß der Zusammensetzung eingerichtet ist.

4. Verfahren nach einem der vorhergehenden Ansprüche, wobei das Festlegen (120) der Zusammensetzung des Schutzgases umfasst:
Vergleichen der erfassten Temperatur mit mindestens einem vorbestimmten Temperaturwert, und bei Über- oder Unterschreiten des vorbestimmten Temperaturwerts, Ändern der Zusammensetzung des Schutzgases gemäß vorbestimmter Vorgaben.

5. Verfahren nach einem der vorhergehenden Ansprüche, wobei das Festlegen (120) der aktuellen Zusammensetzung des Schutzgases umfasst:
Berechnen der Zusammensetzung des Schutzgases mittels einer vorgegebenen Zuordnung oder Funktion, wobei die erfasste Temperatur eine Variable der Zuordnung oder Funktion ist.

6. Verfahren nach einem der vorhergehenden Ansprüche, wobei die Zusammensetzung des Schutzgases mindestens zwei Komponenten (34, 36) umfasst.

7. Verfahren nach Anspruch 6, wobei eine erste Komponente (34) der Zusammensetzung Argon oder ein argonbasiertes Gasgemisch ist, und wobei eine zweite Komponente (36) Helium ist.

8. Verfahren nach Anspruch 7, wobei der Anteil von Helium im Verlauf des Schweißvorgangs bei bis zu 100%, oder zwischen 0 -70%, oder zwischen 0 und 50%, oder zwischen 0 und 30% liegt.

9. Verfahren nach einem der vorhergehenden Ansprüche, wobei der Schweißvorgang ein Draht-Auftragsschweißvorgang ist, und wobei zu Beginn des Auftragsschweißvorgangs ein Anteil von 30-60% Helium in der Zusammensetzung des Schutzgases verwendet wird.

10. Verfahren nach einem der vorhergehenden Ansprüche, wobei eine Komponente der Zusammensetzung CO₂ ist, und wobei der Anteil von CO₂ im Verlauf des Schweißvorgangs zwischen 0-25%, oder zwischen 0 und 10%, oder zwischen 0 und 4% liegt.

11. Verfahren nach einem der vorhergehenden Ansprüche, weiter umfassend Verändern von Parametern eines für den Schweißvorgang verwendeten Schweißbrenners (10) auf Grundlage der festgelegten Zusammensetzung des Schutzgases.

12. Computerprogrammprodukt, umfassend Befehle, die bei der Ausführung des Programms durch einen Prozessor diesen veranlassen, das Verfahren gemäß einem der vorhergehenden Ansprüche auszuführen.

13. Vorrichtung zur dynamischen Zuführung von Schutzgas, umfassend:
eine Steuereinheit (42), die zum Ausführen des Verfahrens gemäß einem der Ansprüche 1 bis 11 eingerichtet ist,
eine Gasmischeinheit (38), die eingerichtet ist, mindestens eine erste (34) und eine zweite Komponente (36) eines Schutzgases auf Grundlage eines Steuersignals abzugeben, wobei das Steuersignal von der Steuereinheit (42) an die Gasmischeinheit (38) übertragen wird; und
eine Temperaturmesseinrichtung (40), die eingerichtet ist zum Erfassen der Temperatur eines Bauteils (18) und zum Weiterleiten der Temperatur an die Steuereinheit (42).
